# EUROPEAN PATENT APPLICATION

(11) **EP 4 756 624 A1**
(43) Date of publication of application: **10.06.2026**
(21) Application number: 24217965.3
(22) Date of filing: 06.12.2024
(51) Int. Cl.: G06F 11/26, G06F 11/3668, B60W 50/023

(54) **HANDLING A VEHICLE COMPRISING REDUNDANT COMPONENTS**

(71) Applicant: Volvo Truck Corporation, 405 08 Göteborg (SE)
(72) Inventor: GELSO, Esteban, 421 51 Västra Frölunda (SE); SADEGHI KATI, Maliheh, 433 51 Öjersjö (SE)
(74) Representative: Valea AB

(57) **Abstract**

A computer system (600) comprising processing circuitry (602) configured to handle a vehicle (1) comprising and being controlled by a first set of components (11) is provided. The vehicle (1) further comprises a second set of components (12) being initially set to an inactive state. The second set of components (12) comprises redundant components of the first set of components (11). The processing circuitry (602) is configured to, in response to a periodic event or a triggered event, activate at least one target component of the second set of components (12). The at least one target component comprises at least one target software component and/or at least one target control unit. Activating the at least one target component comprises at least one of utilizing, initializing, or monitoring the at least one target software component and/or the at least one target control unit.

## Description

### TECHNICAL FIELD

The disclosure relates generally to automotive technology. In particular aspects, the disclosure relates to handling a vehicle comprising redundant components. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle may comprise redundant components for controlling the vehicle if primary components do not function with high accuracy. However, over time such as when vehicles operate, the redundant components may be at risk of degradation or malfunction.

As such, when there is a need to switch to the redundant components for controlling the vehicle, the redundant components may not be able to accurately control the vehicle, thereby causing the vehicle to have to operate in a degraded mode or to completely stop. This is particularly true if the components relate to controlling safety-critical operations such as being part of an Automated Driving System (ADS) and/or for controlling autonomous vehicles carrying passengers.

Hence, there is a need to improve handling of vehicles comprising redundant components.

### SUMMARY

According to a first aspect of the disclosure, a computer system comprising processing circuitry configured to handle a vehicle is provided. The vehicle comprises, and is controlled by, a first set of components. The vehicle comprises a second set of components being initially set to an inactive state. The second set of components comprises redundant components of the first set of components.

The second set of components is arranged to be capable of performing corresponding operations of the first set of components. In other words, the second set of components may be a redundant copy of the first set of components which may be configured to perform the same type of operations as the first set of components. As an alternative, the second set of components may be an alternative set of components, different from the first set of components, which second set of components may be configured to perform alternative operations, different to, but corresponding to operations performed by the first set of components.

The processing circuitry is configured to, in response to a periodic event or a triggered event, activate at least one target component of the second set of components. The at least one target component comprises at least one target software component and/or at least one target control unit.

Activate the at least one target component comprises at least one of utilizing, initializing, or monitoring the at least one target software component and/or the at least one target control unit.

The first aspect of the disclosure may seek to improve handling of vehicles comprising redundant components.

A technical benefit may include a more efficient handling of the vehicle. This is since when activating the at least one target component, malfunction or degradation of the at least one target component may be mitigated or detected such that the issue can be resolved in a timely manner, e.g., when the vehicle is regularly maintained or if applicable, by remote updates. Alternatively, when a degradation or malfunction is detected, more efficient handling of the vehicle can be made, e.g., when determining whether to use the first set of components or the second set of components for controlling the vehicle.

Accordingly, effects of malfunction or degradation of redundant components can be removed or mitigated, thereby the vehicle can be operated more efficiently.

In particular, when utilizing the at least one target control unit or the at least one target software component, the at least one target control unit or the at least one target software component are utilized and if there are any degradations or malfunctions, those are likely to be detected during utilization such as by obtaining software error messages or exceptions. Furthermore, lingering issues such as memory leaks or other software errors can be ruled out if they are utilized.

When initializing the at least one control unit or the at least one target software component, the at least one target control unit or the at least one target software component are ensured to be in a ready state to control the vehicle if necessary. Initializing may further mean to re-initialize the at least one target control unit or the at least one target software component to ensure that they are properly initialized to control the vehicle.

In particular, when utilizing the at least one target control unit or the at least one target software component, any behavior indicating malfunction or degradation of the at least one control unit or the at least one target software component may be detected.
As a response to detecting a malfunction or degradation, or risk thereof, of the at least one target component, it may be possible to schedule a maintenance operation, or sometimes it may even be possible to remotely update the at least one target component such as when the vehicle is operating, to resolve any problem with degradation or malfunction. As such, vehicle handling is improved and the vehicle can operate more efficiently since the redundant components stay operational and/or since malfunction or degradation of redundant components is efficiently handled.

Optionally in some examples, including in at least one preferred example, the processing circuitry is further configured to test whether or not the at least one target component is functional.

A technical benefit may include improved handling of the vehicle. This is since when the at least one target component is tested to be functional or not, explicit information of its status is gathered such that it may be possible to determine whether or not the second set of components should or can be used for controlling the vehicle, and it may further be possible to schedule maintenance and/or to provide remote update of the at least one target component, if applicable.

Optionally in some examples, including in at least one preferred example, the at least one target component further comprises at least one of:
- at least one target actuator,
- at least one target sensor, and
- at least one target mechanical component.

A technical benefit may include improved handling of the vehicle. This is since actuators, sensors, and mechanical components may further be activated and/or tested to detect or mitigate any malfunction or degradation. While degradation or mitigation of malfunction of software components and control units is achieved merely by activation, such effects are even greater for hardware components such as actuators, and mechanical components, e.g., to mitigate or avoid any build-up of rust.

Optionally in some examples, including in at least one preferred example, the processing circuitry is configured to test the at least one target component with respect to at least one of: a virtual model, or a mathematical model.

A technical benefit may include improved handling of the vehicle. This is since using a mathematical model or a virtual model it may be possible to detect any degradation or malfunction without having to fully or at all utilize the at least one component for controlling the vehicle. Instead, for the at least one target software component and/or the at least one target control unit, input and/or output may be used to control a virtual model which may then test to see if the at least one target software component and/or the at least one target control unit is functioning properly. Alternatively, the mathematical model may be used to analyze any aspect of the at least one target software component and/or the at least one target control unit, e.g., their inputs and outputs such as to see if they are within certain intervals or produce correct output etc.

Optionally in some examples, including in at least one preferred example, the virtual model is a model representing the vehicle or the at least one target component, or representing a combination of the vehicle and the at least one target component.

A technical benefit may include improved handling of the vehicle. This is since the virtual model can accurately represent any suitable aspect of the vehicle or the at least one target component such that it is possible to detect any degradation or malfunction in an efficient and accurate manner.

Optionally in some examples, including in at least one preferred example, the virtual model models vehicle behavior based on at least one of:
- a measured input or output data of the vehicle or of another reference vehicle,
- a predicted behavior of the vehicle or of the reference vehicle, or
- a virtual driver model for controlling the vehicle or for controlling the reference vehicle.

A technical benefit may include improved handling of the vehicle. This is since the at least one target component may be tested with respect to any suitable scenario, or input/output which leads to that it is possible to detect any degradation or malfunction in an efficient and accurate manner.

In particular, the at least one target component may be used to control some aspect of the vehicle or reference vehicle in the virtual model, which can then be used as comparison to what corresponding components of the first set of components is producing while actually controlling the vehicle. When the second set of components is a redundant copy of the first set of components, the inputs, outputs, other parameters or behavior of the at least one target component should match, within an error margin, a corresponding inputs, outputs, other parameters or behavior of at least one component of the first set of components.

When the second set of components is a redundant alternative set of components for the first set of components, a predefined model may be used to correlate the inputs, outputs, or other parameters or behavior of the at least one target component in how it should match, within an error margin, to the corresponding at least one component of the first set of components.

Optionally in some examples, including in at least one preferred example, when the at least one target component comprises at least one target software component, the processing circuitry is configured to test the at least one target software component by verifying input and output associated with the at least one target software component with at least one of:
- historical data of input and output associated with the at least one target software component, or
- input and output of a virtual model of the vehicle or of the at least one target software component.

A technical benefit may include improved handling of the vehicle. This is since the input and output can be verified, e.g., with respect to what the input and output should normally relate to, and hence, it can be detected efficiently if the at least one target component is functioning properly or not.

Optionally in some examples, including in at least one preferred example, when the at least one target component comprises at least one target control unit, the processing circuitry is configured to test the at least one target control unit by initializing the at least one target control unit.

A technical benefit may include improved handling of the vehicle. This is since when the at least one target control unit is initialized, it may further be tested if the initialization was performed correctly, which is typically part of an initialization process. If the at least one target control unit is unable to initialize properly, it may be detected that there is a malfunction and the vehicle can thereby be handled accordingly. Furthermore, if no issues are detected, it can be assumed that the at least one target control unit is ready to take over control of the vehicle when or if such need arises.

Optionally in some examples, including in at least one preferred example, when the at least one target component comprises at least one target control unit, the processing circuitry is configured to test the at least one target control unit by configuring the at least one target control unit to control a virtual model of the vehicle, and to assess an output of the virtual model.

A technical benefit may include improved handling of the vehicle, this is since it can be efficiently tested if the at least one target control unit can accurately control the virtual model such as by analyzing the output. Heuristics may be used to immediately detect if the output is inaccurate such as by observing unfeasible or impossible output, and/or the output can be compared with corresponding output of the vehicle.

Optionally in some examples, including in at least one preferred example, the periodic or triggered event is based on at least one of:
- one or more operations performed by the vehicle,
- input provided to one or more control systems or one or more interfaces of the vehicle,
- a detected fault or error associated with the vehicle,
- a detected safe operating state associated with the vehicle,
- an age of the vehicle,
- a distance travelled by vehicle,
- one or more environmental conditions of the vehicle,
- one or more predefined points in time and/or one or more predefined periodic intervals, and
- one or more historical records of controlling one or more actuators of the vehicle.

A technical benefit may include improved handling of the vehicle. This is since the activation and/or testing of the at least one target component can be performed at efficient intervals or event to ensure that degradation or malfunction is detected early or mitigation may also be set such that the activation does not consume too much energy or wear associated with activating the at least one target component. The periodic or triggered event may further be updated over time based on the above-mentioned parameters which may indicate an increase in risk for malfunction or degradation, such as to increase activation or testing of the at least one target component when the vehicle is older, travelled longer, or have had other issues, or that the environment changes, etc.

Optionally in some examples, including in at least one preferred example, at least part of the computer system is comprised in a location remote from the vehicle.

A technical benefit may include improved handling of the vehicle. This is since at least part of operations are offloaded from the vehicle, and may be arranged to be part of a specialized computation environment.

According to a second aspect of the disclosure, a vehicle is provided. The vehicle comprises a first set of components. The vehicle is being controlled by the first set of components. The vehicle further comprises a second set of components being initially set to an inactive state. The second set of components comprises redundant components of the first set of components. The second set of components is arranged to be capable of performing corresponding operations of the first set of components. The vehicle comprises and/or is controlled by the computer system according to the first aspect.

According to a third aspect of the disclosure, a computer-implemented method for handling a vehicle comprising and being controlled by a first set of components is provided. The vehicle further comprises a second set of components being initially set to an inactive state. The second set of components comprises redundant components of the first set of components. The second set of components is arranged to be capable of performing corresponding operations of the first set of components.

The method comprises, by a processing circuitry of a computer system, in response to a periodic event or a triggered event, activating at least one target component of the second set of components. The at least one target component comprises at least one target software component and/or at least one target control unit. Activating the at least one target component comprises at least one of utilizing, initializing, or monitoring the at least one target software component and/or the at least one target control unit.

Optionally in some examples, including in at least one preferred example, the method comprises, by the processing circuitry of the computer system, testing whether or not the at least one target component is functional.

Optionally in some examples, including in at least one preferred example, the at least one target component further comprises at least one of: at least one target actuator, at least one target sensor, and at least one target mechanical component.

Optionally in some examples, including in at least one preferred example, the method comprises testing the at least one target component with respect to at least one of: a virtual model, or a mathematical model.

Optionally in some examples, including in at least one preferred example, the virtual model is a model representing the vehicle or the at least one target component.

Optionally in some examples, including in at least one preferred example, the virtual model models vehicle behavior based on at least one of: a measured input or output data of the vehicle or of another reference vehicle, a predicted behavior of the vehicle or of the reference vehicle, or a virtual driver model for controlling the vehicle or for controlling the reference vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** illustrates a vehicle according to an example.
**FIG. 2** is a flow chart of an exemplary method according to an example.
**FIG. 3** illustrates an example scenario.
**FIG. 4** is another view of **FIG. 1****,** according to an example.
**FIG. 5** is a flow chart of an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As part of developing examples herein the inventors have identified one or more issues with redundant components of vehicles which will first be discussed.

One realization of developing examples herein has been that redundant components of vehicles are often not used, and as such they may be subject to degradation or malfunction or any other issues simply by being inactive for a period of time. Such scenarios are common for ADS or autonomous vehicles since the redundant components are often meant to be a backup in case primary components stop functioning properly, which may be rare.

Degradation or malfunction may happen for many reasons, e.g., due to age, wear, or due to incompatibility with adjustments of a vehicle or vehicle configurations. Hardware components may in particular degrade by rust or physical interactions. However, control units or software components such as computer programs or operating systems may also degrade or malfunction, such as if they are not properly initialized, updated in a wrong manner, or if they experience bugs, runtime errors, or memory errors, and may also malfunction if introduced with incompatible components, etc.

In particular, for an autonomous vehicle, the vehicle may have redundant actuators, such as redundant brake systems and steering systems. A subset of such actuators may be called primary actuators, and they may be controlled as long as possible using, e.g., primary control units, e.g., Electronic Control Units (ECUs) like a primary Vehicle Control Module (VCM). When it is not possible to efficiently or accurately control the vehicle with said actuators, there may be a handover to a redundant actuator, and potentially of control units to a redundant control unit like a secondary ECU or VCM.

An issue may arise in that the secondary actuators may be idle for long periods of time, with a corresponding deterioration of them for inactivity. Another issue may be that the redundant control unit may not be connected to the actuators of the vehicle and/or have loss of feedback of the vehicle actions. Hence, the redundant control unit may thereby not be able to control the vehicle efficiently as there may need to be an initialization with respect to current active actuators for controlling the vehicle.

Examples herein aim to overcome or mitigate at least part of the above-mentioned issues, or at least to provide a suitable alternative.

Examples herein may relate to a proactive approach that involves periodically activating the redundant components. In this way the prolonged inactivity and deterioration may be alleviated.

Periodic activation of secondary components could be based on factors such as vehicle/fleet usage patterns, the vehicle age, environmental conditions, previous activation historical/diagnostic data/issues, and even manufacturers and suppliers may be able to provide recommendations regarding the activation schedule regarding different types of components.

Redundant software-based components or control units may be regularly initialized, tested, and monitored such as using a virtual vehicle model, ensuring that control algorithms, functions and the output responses are effective and functioning, even during the period of inactivity.

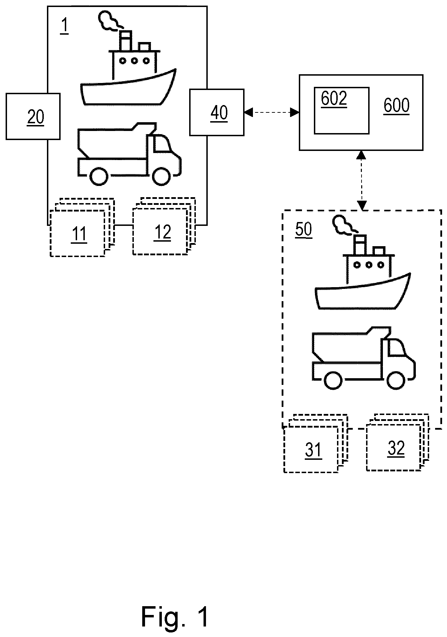

**FIG. 1** illustrates a **vehicle 1** according to an example.

The vehicle 1 may be any suitable vehicle. As a non-limiting example, the vehicle 1 may be a land vehicle or a marine vessel, e.g., the vehicle 1 may be any of a truck, car, bus, heavy duty vehicle, construction equipment, boat, or submarine.

The vehicle 1 may be autonomous and/or comprise an ADS for controlling steering and/or vehicle motion of the vehicle 1.

The vehicle 1 comprises a first set of components 11. The vehicle 1 is controlled by the first set of components 11.

The vehicle 1 comprises a second set of components 12 being initially set to an inactive state. The second set of components 12 comprises redundant components of the first set of components 11. The second set of components 12 is arranged to be capable of performing corresponding operations of the first set of components 11.

In other words, the second set of components 12 may be a redundant copy of the first set of components 11 which may be configured to perform the same type of operations as the first set of components 11. As an alternative, the second set of components 12 may be an alternative set of components, different from the first set of components 11, which second set of components 12 may be configured to perform alternative operations, different to, but corresponding to operations performed by the first set of components 11. For example, the second set of components 12 may relate to different types of operation for controlling vehicle motion, e.g., traction control or stability control, which for a user may appear similar, but which may have different energy consumption or may rely on different sensors. As another example, there could be differences in performance between the first and second set of components 11, 12, e.g. slower response, higher energy consumption, less computationally powerful ECU, etc..

In particular, the first set of components 11 and the second set of components 12 may respectively be part of an Advanced Driving System (ADS). In these examples, the first and second set of components 11, 12 may respectively be a distinct ADS, or the first and second set of components 11, 12 may be primary and redundant parts of the same ADS.

In particular, both the first set of components 11, and the second set of components 12, may comprise respective one or more software components or one or more control units, but may further also comprise any suitable other components for controlling the vehicle 1, e.g., sensors, actuators, and mechanical hardware components. However, examples herein may focus primarily on ensuring that software components and/or control units are functioning properly despite inactivity.

Examples herein may relate to activating, or in some examples, testing, at least one target component of the second set of components 12 to ensure that the at least one target component is working properly and not degraded due to inactivity.

Examples herein may further comprise a **virtual model 50.** The virtual model 50 may be used for testing whether the at least one target component is working properly, without having to utilize the at least one target component with the vehicle 1 when the vehicle is operating. The virtual model 50 may be any suitable model of the vehicle 1, other reference vehicle comparable to the vehicle 1, or any suitable number of components therein. For example, the vehicle model 50 may be a representation of the vehicle 1, such as a simulation or digital twin of the vehicle 1, or may be a representation of another reference vehicle comparable with the vehicle 1.

When being a representation of the vehicle 1, the virtual model 50 may comprise a **third set of components 31** representing the first set of components and a **fourth set of components 32** representing the second set of components.

The vehicle 1 may comprise a **sensor arrangement 20,** e.g., comprising at least one sensor. The sensor arrangement comprises any suitable sensor and/or other entity for measuring, estimating, or otherwise obtaining any suitable aspect of examples herein, such as any suitable information needed of the vehicle 1, the first set of components 11, or the second set of components 12.

Any of the examples herein may be performed by a computer system 600 and/or a **processing circuitry 602** therein. In other words, the computer system 600 and/or the processing circuitry 602 therein may be configured to perform the examples herein.

The computer system 600 and/or the processing circuitry 602 therein, may be comprised in the vehicle 1 and/or may be fully or partly remote to the vehicle such as part of a server or a cloud service. In other words, at least part of the computer system 600 may be comprised in a location remote from the vehicle 1.

The computer system 600 and/or the processing circuitry 602 therein may be arranged to be able to control and/or communicate with any suitable entity of the vehicle 1, e.g., the first set of components 11 and/or the second set of components 12.

The computer system 600 and/or the processing circuitry 602 therein may for example be able to communicate with the vehicle 1 such as to receive and transmit information, e.g., via a communications interface of the computer system 600. The vehicle 1 may communicate with the computer system 600 using a **communications interface 40,** e.g., a wireless or wired transceiver e.g., for wired or wireless communications with the computer system 600. The communications interface 40 may be comprised in the vehicle 1.

The computer system 600 and/or the processing circuitry 602 therein may for example control the virtual model 50, and/or may be able to communicate with any device which maintains the virtual model 50.

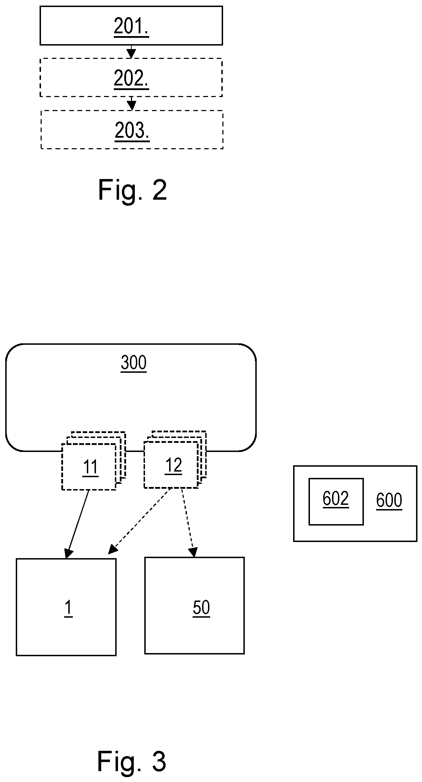

**FIG. 2** is a flow chart of an exemplary computer-implemented method for handling the vehicle 1 comprising and being controlled by the first set of components 11. The vehicle 1 further comprises a second set of components 12 being initially set to an inactive state. The second set of components 12 comprises redundant components of the first set of components 11. The second set of components 12 is arranged to be capable of performing corresponding operations of the first set of components 11. The computer system 600 and/or the processor circuitry 602 therein may be configured to perform the method, however the discussed features in the action may also apply to the vehicle. The method comprises at least one of the following actions which may be taken in any suitable order. Optional actions may be indicated as dashed boxes in FIG. 2.

### Action 201

The method comprises, in response to a periodic event or a triggered event, activating at least one target component of the second set of components 12.

The at least one target component comprises at least one target software component and/or at least one target control unit.

Activating the at least one target component comprises at least one of utilizing, initializing, or monitoring the at least one target software component and/or the at least one target control unit.

In some examples, the at least one target component further comprise at least one of: at least one target actuator, at least one target sensor, and at least one target mechanical component.

The activation of the at least one target component ensures that the at least one target component can transition from an inactive state to an active state, which may be seen as an implicit test that the at least one target component has at least some functionality. Furthermore, activating the at least one target component ensures that there is less risk of degradation or malfunction of the at least one target component due to inactivity.

The periodic or triggered event is based on at least one of:
- one or more operations performed by the vehicle 1,
- input provided to one or more control systems or one or more interfaces of the vehicle 1,
- a detected fault or error associated with the vehicle 1,
- a detected safe operating state associated with the vehicle 1,
- an age of the vehicle 1,
- a distance travelled by vehicle 1,
- one or more environmental conditions of the vehicle 1,
- one or more road conditions of the vehicle 1,
- one or more predefined points in time and/or one or more predefined periodic intervals, and
- one or more historical records of controlling one or more actuators of the vehicle 1.

In other words, the periodic or triggered event may be set or updated based on a need for such an event. E.g., as the vehicle 1 increase its age, more activation may be needed since malfunction or degradation may grow likelier.

The one or more historical records may relate to, or comprise, information of successful usages, failures, activation times, and/or any other suitable statistics of controlling the actuators, such as by using the at least one target software component and/or the at least one target control unit when controlling the one or more actuators. Such information of behavior of the one or more actuators may indicate how often activation or testing may be needed, e.g., based on when failures occur often or within a certain time period such as within a certain period of time, or its inverse if expressed as failure occurrence frequency. Time or time period may be expressed as calendar time, time being active, or time being inactive.

As one example the one or more environmental conditions of the vehicle 1 may comprise at least one of:
- current or predicted weather conditions, or
- current or predicted road conditions.

The one or more environmental conditions may in particular affect how often it may be needed to activate the at least one target component since it may be predefined under what environmental conditions the at least one target component may be most likely to malfunction or degrade, e.g., under cold or hot conditions, heavy rain, wind.

Similar to environmental conditions, the one or more road conditions such as smoothness of the road in e.g., off-road driving, road type like highway or city driving, hilly or flat, etc., may further indicate how often it may be needed to activate the at least one target component.

### Action 202

The method may comprise testing whether or not the at least one target component is functional. Functional as used herein may mean that the at least one component fulfills a requirement for being used for controlling the vehicle 1. In other words, while the at least one component may react to some input etc. it may not provide the functionality needed for controlling the vehicle 1 such as for being part of an ADS.

Testing whether or not the at least one target component is functional may be performed as part of, or in addition to activating the least one target component.

In other words, testing whether or not the at least one target component is functional may be performed in response to the periodic event or the triggered event.

Testing the at least one target component may be performed with respect to at least one of:
- a virtual model 50, e.g., by comparing inputs and/or outputs of the at least one target component with corresponding inputs and/or of the virtual model 50, or
- a mathematical model, e.g., by comparing inputs and/or outputs of the at least one target component with predefined mathematical relationships that should be adhered to for the at least one target component, e.g., limits or rates of changes if tested over a period of time, etc.

Testing using the virtual model 50 may include hardware verification such as Hardware In Loop (HIL) verification.

Testing using the mathematical model may comprise comparing steady-state responses with dynamic responses of the at least one target component. The steady-state responses may have been recorded previously.

In examples herein, the virtual model 50 may be a model representing the vehicle 1 or the at least one target component, or representing a combination of the vehicle 1 and the at least one target component.

The virtual model 50 may for example model a vehicle behavior based on at least one of:
- a measured input or output data of the vehicle 1 or of another reference vehicle,
- a predicted behavior of the vehicle 1 or of the reference vehicle, or
- a virtual driver model for controlling the vehicle 1 or for controlling the reference vehicle.

Accordingly, the modeled vehicle behavior of the virtual model 50 may be compared with inputs, outputs, or other parameters of the at least one component. If the at least one component adheres to the modeled vehicle behavior, e.g., within certain interval of the modeled vehicle behavior if comparing a specific parameter, it may be considered functional, and otherwise it may be considered non-functional.

In some examples, when the at least one target component comprises at least one target software component, testing the at least one target software component comprises verifying input and output associated with the at least one target software component with at least one of:
- historical data of input and output associated with the at least one target software component, or
- input and output of a virtual model 50 of the vehicle 1 or of the at least one target software component.

In particular, it may be possible to use the same input from the vehicle 1 and compare the output with output of the vehicle 1 with output of the virtual model 50.

The historical data may be stored historical both input and output for the vehicle 1 and hence, more coverage of the testing can be attained with respect to using the historical data.

In some examples, when the at least one target component comprises at least one target control unit, testing the at least one target control unit comprises initializing the at least one target control unit. Initializing the at least one target control unit may comprise starting up and configuring the at least one target control unit with current actuators, sensors, and/or mechanical components of the vehicle 1 and/or the second set of components 12.

For initialization, it may be important to ensure that most or all relevant signals and/or parameters are stored in a memory. This may include any of vehicle configuration parameters, settings of a driver, states of the vehicle 1 such as position or motion, or parameters of controllers such as integrators in Proportional Integral (PI) controllers.

The test may comprise any explicit testing to ensure that initialization is completed, e.g., the parameters are set, or simply waiting for initialization to complete as any failures may be detected automatically by the initialization process. If no particular testing is performed, initializing the at least one target control unit may further be seen as performed as part of action 201 in activating the at least one target control unit.

Initializing the at least one target control unit may further comprise initializing and/or configuring any related software components to the at least one target control unit.

In some examples, when the at least one target component comprises the at least one target control unit, testing the at least one target control unit may comprise configuring the at least one target control unit to control the virtual model 50 of the vehicle 1, and to assess an output of the virtual model 50. In some examples, the at least one target control unit may control a virtual copy of the vehicle 1 as part of the virtual model 50, and as such, it may be determined if the at least one target control unit is able to properly control the virtual copy of the vehicle 1.

### Action 203

The method may further comprise, in response to detecting that the at least one target component is not functional, triggering at least one of:
- refraining from controlling the vehicle 1 using the at least one target component,
- an update of the at least one target component, e.g., when applicable, a remote update of software may be performed,
- a maintenance operation to be performed with respect to the at least one target component, e.g., for replacing or repairing the at least one target component.

**FIG. 3** illustrates an example scenario of an ADS 300 which is primarily controlled by the first set of components 11 and as a backup if the first set of components 11 stop functioning, the ADS 300 may fall back to use the second set of components 12. The ADS 300 may be configured to control steering and/or vehicle motion of the vehicle 1 such as propulsion and braking. The first set of components 11 may control the vehicle 1.

The second set of components 12 may be capable of controlling the vehicle 1. To test that the second set of components 12 are functional, the second set of components 12 may be tested by controlling the virtual model 50, e.g., a virtual copy of the vehicle 1. Inputs and outputs of the second set of components 12 controlling the virtual model 50 may be compared with inputs and/or outputs of the vehicle 1.

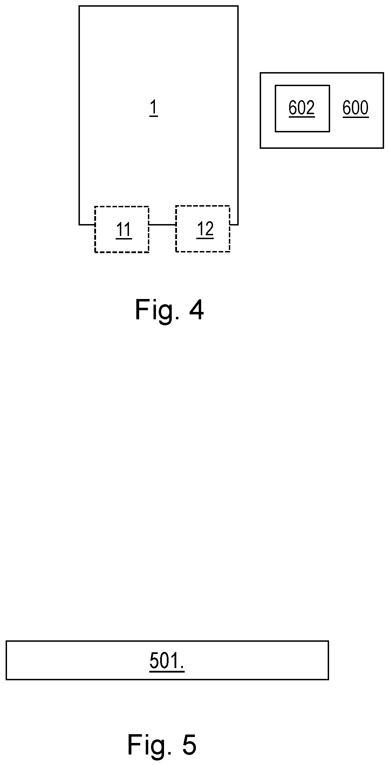

**FIG. 4** is another view of **FIG. 1****,** according to an example.

The computer system 600 comprises processing circuitry 602 configured to handle the vehicle 1. The vehicle 1 comprises and is controlled by the first set of components 11. The vehicle 1 further comprises the second set of components 12. The second set of components 12 is initially set to an inactive state. The second set of components 12 comprises redundant components of the first set of components 11. The second set of components 12 is arranged to be capable of performing corresponding operations of the first set of components 11.

The processing circuitry 602 is configured to, in response to a periodic event or a triggered event, activate at least one target component of the second set of components 12.

The at least one target component comprises at least one target software component and/or at least one target control unit.

Activating the at least one target component comprises at least one of utilizing, initializing, or monitoring the at least one target software component and/or the at least one target control unit.

**FIG. 5** is a flow chart of an exemplary computer-implemented method for handling the vehicle 1 comprising and being controlled by the first set of components 11. The vehicle 1 further comprises the second set of components 12. The second set of components 12 is initially set to an inactive state. The second set of components 12 comprises redundant components of the first set of components 11. The second set of components 12 is arranged to be capable of performing corresponding operations of the first set of components 11.

The method may be combined with any of the examples above, below, or with the subject matter of the attached claims, in any suitable manner.

The method comprises the following action 501.

### Action 501

The method comprises, by the processing circuitry 602 of the computer system 600, in response to a periodic event or a triggered event, activating at least one target component of the second set of components 12.

The at least one target component comprises at least one target software component and/or at least one target control unit.

Activating the at least one target component comprises at least one of utilizing, initializing, or monitoring the at least one target software component and/or the at least one target control unit.

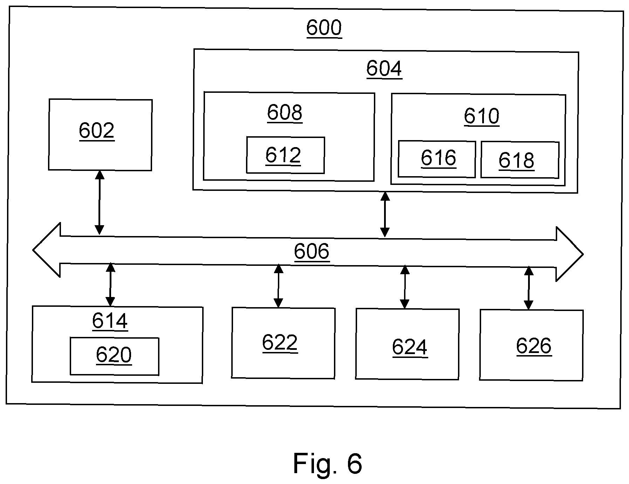

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of **Examples 1-20** which may be combined with any of the examples above and/or with the subject matter of the attached claims, in any suitable manner.
Example 1. A computer system (600) comprising processing circuitry (602) configured to handle a vehicle (1) comprising and being controlled by a first set of components (11), the vehicle (1) further comprising a second set of components (12) being initially set to an inactive state, which second set of components (12) comprises redundant components of the first set of components (11) and wherein the second set of components (12) is arranged to be capable of performing corresponding operations of the first set of components (11), the processing circuitry (602) being configured to:
   - in response to a periodic event or a triggered event, activate at least one target component of the second set of components (12),
      - wherein the at least one target component comprises at least one target software component and/or at least one target control unit, and
      - wherein activating the at least one target component comprises at least one of utilizing, initializing, or monitoring the at least one target software component and/or the at least one target control unit.
Example 2. The computer system (600) of Example 1, wherein the processing circuitry (602) is further configured to test whether or not the at least one target component is functional.
Example 3. The computer system (600) of Example 1 or 2, wherein the at least one target component further comprises at least one of:
   - at least one target actuator,
   - at least one target sensor, and
   - at least one target mechanical component.
Example 4. The computer system (600) of any of Examples 1-3, wherein the processing circuitry (602) is configured to test the at least one target component with respect to at least one of:
   - a virtual model (50), or
   - a mathematical model.
Example 5. The computer system (600) of Example 4, wherein the virtual model (50) is a model representing the vehicle (1) or the at least one target component, or representing a combination of the vehicle and the at least one target component.
Example 6. The computer system (600) of Example 4 or 5, wherein the virtual model (50) models vehicle behavior based on at least one of:
   - a measured input or output data of the vehicle (1) or of another reference vehicle,
   - a predicted behavior of the vehicle (1) or of the reference vehicle, or
   - a virtual driver model for controlling the vehicle (1) or for controlling the reference vehicle.
Example 7. The computer system (600) of any of Examples 2-6, wherein, when the at least one target component comprises at least one target software component, the processing circuitry (602) is configured to test the at least one target software component by verifying input and output associated with the at least one target software component with at least one of:
   - historical data of input and output associated with the at least one target software component, or
   - input and output of a virtual model (50) of the vehicle (1) or of the at least one target software component.
Example 8. The computer system (600) of any of Examples 2-7, wherein, when the at least one target component comprises at least one target control unit, the processing circuitry (602) is configured to test the at least one target control unit by initializing the at least one target control unit.
Example 9. The computer system (600) of any of Examples 2-8, wherein, when the at least one target component comprises at least one target control unit, the processing circuitry (602) is configured to test the at least one target control unit by configuring the at least one control unit to control a virtual model (50) of the vehicle, and to assess an output of the virtual model (50).
Example 10. The computer system (600) of any of Examples 1-9, wherein the periodic or triggered event is based on at least one of:
   - one or more operations performed by the vehicle (1),
   - input provided to one or more control systems or one or more interfaces of the vehicle (1),
   - a detected fault or error associated with the vehicle (1),
   - a detected safe operating state associated with the vehicle (1),
   - an age of the vehicle (1),
   - a distance travelled by vehicle (1),
   - one or more environmental conditions of the vehicle (1),
   - one or more predefined points in time and/or one or more predefined periodic intervals, and
   - one or more historical records of controlling one or more actuators of the vehicle (1).
Example 11. The computer system (600) of any of Examples 1-10, wherein at least part of the computer system (600) is comprised in a location remote from the vehicle (1).
Example 12. A vehicle (1) comprising a first set of components (11), the vehicle (1) is being controlled by the first set of components (11), the vehicle (1) further comprising a second set of components (12) being initially set to an inactive state, which second set of components (12) comprises redundant components of the first set of components (11) and wherein the second set of components (12) is arranged to be capable of performing corresponding operations of the first set of components (11), the vehicle (1) further comprising and/or is controlled by the computer system (600) according to any of Examples 1-11.
Example 13. A computer-implemented method for handling a vehicle (1) comprising and being controlled by a first set of components (11), the vehicle (1) further comprising a second set of components (12) being initially set to an inactive state, which second set of components (12) comprises redundant components of the first set of components (11) and wherein the second set of components (12) is arranged to be capable of performing corresponding operations of the first set of components (11), the method comprising:
   - by a processing circuitry (602) of a computer system (600), in response to a periodic event or a triggered event, activating (201) at least one target component of the second set of components (12),
      - wherein the at least one target component comprises at least one target software component and/or at least one target control unit, and
      - wherein activating the at least one target component comprises at least one of utilizing, initializing, or monitoring the at least one target software component and/or the at least one target control unit.
Example 14. The method of Example 13, further comprising by the processing circuitry (602) of the computer system (600), testing (202) whether or not the at least one target component is functional.
Example 15. The method of Example 13 or 14, wherein the at least one target component further comprises at least one of:
   - at least one target actuator,
   - at least one target sensor, and
   - at least one target mechanical component.
Example 16. The method of any of Examples 13-15, wherein the method comprises testing (201) the at least one target component with respect to at least one of:
   - a virtual model (50), or
   - a mathematical model.
Example 17. The method of Example 16, wherein the virtual model (50) is a model representing the vehicle (1) or the at least one target component.
Example 18. The method of Example 16 or 17, wherein the virtual model (50) models vehicle behavior based on at least one of:
   - a measured input or output data of the vehicle (1) or of another reference vehicle,
   - a predicted behavior of the vehicle (1) or of the reference vehicle, or
   - a virtual driver model for controlling the vehicle (1) or for controlling the reference vehicle.
Example 19. A computer program product comprising program code for performing, when executed by the processing circuitry (602), the method of any of Examples 13-18.
Example 20. A non-transitory computer-readable storage medium comprising instructions, which when executed by the processing circuitry (602), cause the processing circuitry (602) to perform the method of any of Examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to handle a vehicle (1) comprising and being controlled by a first set of components (11), the vehicle (1) further comprising a second set of components (12) being initially set to an inactive state, which second set of components (12) comprises redundant components of the first set of components (11) and wherein the second set of components (12) is arranged to be capable of performing corresponding operations of the first set of components (11), the processing circuitry (602) being configured to:
- in response to a periodic event or a triggered event, activate at least one target component of the second set of components (12),
- wherein the at least one target component comprises at least one target software component and/or at least one target control unit, and
- wherein activating the at least one target component comprises at least one of utilizing, initializing, or monitoring the at least one target software component and/or the at least one target control unit.

2. The computer system (600) of claim 1, wherein the at least one target component further comprises at least one of:
- at least one target actuator,
- at least one target sensor, and
- at least one target mechanical component.

3. The computer system (600) of claim 1 or 2, wherein the processing circuitry (602) is further configured to test whether or not the at least one target component is functional.

4. The computer system (600) of any of claims 1-3, wherein the processing circuitry (602) is configured to test the at least one target component with respect to at least one of:
- a virtual model (50), or
- a mathematical model.

5. The computer system (600) of claim 4, wherein the virtual model (50) is a model representing the vehicle (1) or the at least one target component, or representing a combination of the vehicle and the at least one target component.

6. The computer system (600) of claim 4 or 5, wherein the virtual model (50) models vehicle behavior based on at least one of:
- a measured input or output data of the vehicle (1) or of another reference vehicle,
- a predicted behavior of the vehicle (1) or of the reference vehicle, or
- a virtual driver model for controlling the vehicle (1) or for controlling the reference vehicle.

7. The computer system (600) of any of claims 2-6, wherein, when the at least one target component comprises at least one target software component, the processing circuitry (602) is configured to test the at least one target software component by verifying input and output associated with the at least one target software component with at least one of:
- historical data of input and output associated with the at least one target software component, or
- input and output of a virtual model (50) of the vehicle (1) or of the at least one target software component.

8. The computer system (600) of any of claims 2-7, wherein at least one of:
- when the at least one target component comprises at least one target control unit, the processing circuitry (602) is configured to test the at least one target control unit by initializing the at least one target control unit; and
- when the at least one target component comprises at least one target control unit, the processing circuitry (602) is configured to test the at least one target control unit by configuring the at least one control unit to control a virtual model (50) of the vehicle, and to assess an output of the virtual model (50).

9. The computer system (600) of any of claims 1-8, wherein the periodic or triggered event is based on at least one of:
- one or more operations performed by the vehicle (1),
- input provided to one or more control systems or one or more interfaces of the vehicle (1),
- a detected fault or error associated with the vehicle (1),
- a detected safe operating state associated with the vehicle (1),
- an age of the vehicle (1),
- a distance travelled by vehicle (1),
- one or more environmental conditions of the vehicle (1),
- one or more predefined points in time and/or one or more predefined periodic intervals, and
- one or more historical records of controlling one or more actuators of the vehicle (1).

10. The computer system (600) of any of claims 1-9, wherein at least part of the computer system (600) is comprised in a location remote from the vehicle (1).

11. A vehicle (1) comprising a first set of components (11), the vehicle (1) is being controlled by the first set of components (11), the vehicle (1) further comprising a second set of components (12) being initially set to an inactive state, which second set of components (12) comprises redundant components of the first set of components (11) and wherein the second set of components (12) is arranged to be capable of performing corresponding operations of the first set of components (11), the vehicle (1) further comprising and/or is controlled by the computer system (600) according to any of claims 1-10.

12. A computer-implemented method for handling a vehicle (1) comprising and being controlled by a first set of components (11), the vehicle (1) further comprising a second set of components (12) being initially set to an inactive state, which second set of components (12) comprises redundant components of the first set of components (11) and wherein the second set of components (12) is arranged to be capable of performing corresponding operations of the first set of components (11), the method comprising:
- by a processing circuitry (602) of a computer system (600), in response to a periodic event or a triggered event, activating (201) at least one target component of the second set of components (12),
- wherein the at least one target component comprises at least one target software component and/or at least one target control unit, and
- wherein activating the at least one target component comprises at least one of utilizing, initializing, or monitoring the at least one target software component and/or the at least one target control unit.

13. The method of claim 12, further comprising by the processing circuitry (602) of the computer system (600), testing (202) whether or not the at least one target component is functional, and optionally wherein testing (201) the at least one target component with respect to at least one of:
- a virtual model (50), or
- a mathematical model.

14. A computer program product comprising program code for performing, when executed by the processing circuitry (602), the method of any of claims 12-13.

15. A non-transitory computer-readable storage medium comprising instructions, which when executed by the processing circuitry (602), cause the processing circuitry (602) to perform the method of any of claims 12-13.
